# EUROPÄISCHE PATENTANMELDUNG

(11) **EP 4 086 540 A1**
(43) Veröffentlichungstag der Anmeldung: **09.11.2022**
(21) Anmeldenummer: 22171146.8
(22) Anmeldetag: 02.05.2022
(51) Int. Cl.: F25B 49/00, F25B 47/00, B01D 53/00, B01D 53/04, F24F 110/65, F25B 43/00

(54) **ADSORBER-REGENERATION MIT VOC-ABREICHERUNG**

(30) Priorität: 06.05.2021 DE 102021111808
(71) Anmelder: Vaillant GmbH, 42859 Remscheid NRW (DE)
(72) Erfinder: Badenhop, Thomas, 42499 Hückeswagen (DE); Wohlfeil, Arnold, 42799 Leichlingen (DE)
(74) Vertreter: Popp, Carsten

(57) **Zusammenfassung**

Vorrichtung und Verfahren zur Regeneration eines Adsorbers (11), der zur adsorptiven Abscheidung von gasförmigem Arbeitsfluid dient, welches aus einer in einem Innenraum betriebenen Kältekreisanlage (1) austritt, wobei der Adsorber (11) ausgestattet ist mit einer durchströmbaren Adsorbensschüttung sowie einem Gaseinlass (10), der mit dem Innenraum einer Anlage mit einem Kältekreis verbunden ist, und einem Gasauslass (12), der außerhalb der Anlage mit dem Kältekreis liegt und zur Umgebung hin offen ist, der Adsorber (11) mindestens eine Adsorbensschüttung aufweist, wobei der Adsorber (11) mit mindestens einer Adsorberheizung (13) ausgestattet ist, und diese mindestens eine Adsorberheizung (13) in der zweiten Hälfte des Strömungswegs angeordnet ist.

## Beschreibung

Die Erfindung betrifft die Regeneration eines Adsorbers mit einer Adsorbensschüttung, welche in einem Adsorber dazu verwendet wird, leckagebedingt aus einer Kältemaschine ausgetretenes entzündliches Arbeitsfluid zu adsorbieren. Eine solche Adsorbensschüttung wird eingesetzt als Sicherheit vor einer Kontamination von beispielsweise R290 oder R600a oder R1270 in Gehäusen, in denen ein als Kältemittel wirkendes Arbeitsfluid in einem thermodynamischen Kreisprozess, wie zum Beispiel dem Clausius-Rankine-Kreisprozess, geführt wird. Vorwiegend sind dies Wärmepumpen, Klimaanlagen und Kühlgeräte, wie sie in Wohngebäuden und anderen Einrichtungen, wie Fahrzeugen, Kühlhäusern, medizinischen Apparaten und Industrieanlagen gebräuchlich sind. Gemeinsam ist diesen Kreisprozessen, dass sie unter Einsatz von Energie Nutzwärme oder Nutzkälte erzeugen und Wärmeverschiebungssysteme bilden.

Die zum Einsatz kommenden thermodynamischen Kreisprozesse sind seit langem bekannt, ebenso die Sicherheitsprobleme, die bei der Verwendung geeigneter Arbeitsfluide entstehen können. Abgesehen von Wasser sind die bekanntesten damaligen Arbeitsfluide brennbar und giftig. Sie führten im vergangenen Jahrhundert zur Entwicklung der Sicherheitskältemittel, die aus fluorierten Kohlenwasserstoffen FKW bestanden. Es zeigte sich jedoch, dass diese Sicherheitskältemittel zur Klimaerwärmung führen und dass ihre sicherheitstechnische Unbedenklichkeit zu konstruktiven Unachtsamkeiten führte. Bis zu 70 % des Umsatzes an FKW entfiel auf den Nachfüllbedarf undichter Anlagen und deren Leckageverluste, der hingenommen wurde, solange dies im Einzelfall als wirtschaftlich vertretbar empfunden wurde und Bedarf an Ersatzbeschaffung förderte.

Der Einsatz dieser Kältemittel wurde aus diesem Grund Restriktionen unterworfen, in der Europäischen Union beispielsweise durch die F-Gas-Verordnung (EU) 517/2014.

Die auftretenden Probleme bei der Sicherheitsauslegung solcher Anlagen werden in der WO 2015/032905 A1 anschaulich beschrieben. So liegt die untere Zündgrenze von Propan, welches den Hauptbestandteil des Arbeitsfluids R290 bildet, als Arbeitsfluid etwa bei 1,7 Volumenprozent in Luft, was 38 g/m³ in Luft entspricht.

Die DE 10 2011 116 863 A1 beschreibt ein Verfahren zur Sicherung einer Vorrichtung für einen thermodynamischen Kreisprozess, welche mit einem Prozessfluid betrieben wird, das mindesten eine umweltgefährliche, giftige und/oder entzündliche Substanz enthält oder daraus besteht. Im Falle einer Leckage in der Vorrichtung für einen thermodynamischen Kreisprozess wird ein Adsorbens mit dem Prozessfluid, insbesondere Ammoniak, Propan oder Propen, in Kontakt gebracht und die Substanz durch das Adsorbens selektiv gebunden. Das Adsorbens wird nach Gebrauch regeneriert.

Es wird eine Vielzahl an Adsorbenzien vorgeschlagen, das Adsorbens kann in Form einer Schüttung, eines Formkörpers, eines Anstrichs, eines Sprühfilms oder einer Beschichtung ausgestattet sein. Die Trägerstruktur des Formkörpers kann aus Mikrostruktur, Lamellenstruktur, Rohrbündel, Rohrregister und Blech bestehen und muss mechanisch stabil sowie stark oberflächenvergrößernd sein. Eine Umwälzung der potenziell kontaminierten Luft erfolgt üblicherweise kontinuierlich, kann aber auch durch einen Sensor initiiert werden, der die Lüftung nach Erreichen eines Schwellenwerts oder bei einem erkannten Havariefall einschaltet. Die Adsorption kann innerhalb oder außerhalb eines geschlossenen Raumes durchgeführt werden.

Auch Aktivkohle ist seit langem bekannt als Abscheidemittel für Verunreinigungen in Gasen und Flüssigkeiten. Sie wird aus Kohle gewonnen und mittels Chemikalienbehandlung und überhitztem Wasserdampf aktiviert. Im Handel ist sie in verschiedenen Formen erhältlich, üblich sind Pulver, Pellets, Gewebe, Schüttungen, gesinterte Fest- und Formkörper und viele mehr, wobei in vielen Anwendungsfällen Trägerstrukturen verwendet werden. Die Abscheidewirkung wird erzielt durch eine sehr große innere Oberfläche sowie durch gezielt eingebrachte Imprägnierungen, die bestimmte Verunreinigungen binden. Sie ist besonders geeignet, aber auch die anderen in der DE 10 2011 116 863 A1 genannten Adsorbenzien können benutzt werden, sie müssen lediglich geeignet sein, bei moderaten Temperaturen, also vorzugsweise unter 100 Grad Celsius, desorbierbar zu sein.

Auch andere Stoffe können als Adsorbens geeignet sein. Die EP 3 160 639 B1 beschreibt auf Vinylidenchloridcopolymer basierende Kohlenstoffmolekularsieb-Adsorber-Zusammensetzungen, ihre Herstellung und ihre Verwendung zur stofflichen Trennung einer Mischung aus Propan und Propylen. Nir Tzabar und H.J.M. ter Brake vergleichen und beschreiben in "Adsorption isotherms and Sips models of nitrogen, methane, ethande, and propane on commercial activated carbons and polyvinylidene chloride, Adsorption (2016) 22:901-914 DOI 10.1007/s10450-016-0794-9, die Adsorption von Aktivkohle und aktiviertem Saran, also Polyvinylidenchlorid. Es scheint aber, als lägen die zur Desorption erforderlichen Temperaturen oberhalb von 100 Grad Celsius.

Apparativ üblich sind durchströmte Kartuschen sowie Festbetten mit Rückhaltevorrichtungen, die Adsorbens in den oben genannten Formen enthalten. Die Auslegung solcher Apparate erfolgt, indem man die Beladungskapazität der Adsorbenzien für jeden der abzuscheidenden Stoffe bestimmt, wobei die Beladungskapazität in der Regel stark temperaturabhängig ist, und die Durchströmungsmenge bestimmt. Hierbei ergibt sich im Idealfall ein Adsorptionsgleichgewicht und eine Durchbruchsfront zwischen beladenem und noch unbeladenem Adsorbens. Das gilt vor allem für Abscheidungsvorgänge aus der Gasphase.

Leider ist ein solcher Idealfall in der Praxis selten. So kennt man die Durchströmungsmenge des betreffenden Stoffes oft nicht, vor allem dann, wenn das Adsorbens nur zur Sicherung dient und keine regelhafte Beladung erfolgen soll, oder wenn sich die Temperatur und damit die Beladungskapazität plötzlich stark ändert, was allein schon aufgrund der freiwerdenden Adsorpionswärme geschehen kann, oder wenn verschiedene abzuscheidende Stoffe sich gegenseitig verdrängen. Man kann also den Beladungszustand nicht in herkömmlicher Weise aus BET-Kurven oder ähnlichen Methoden ableiten. Außerdem hat man über längere Zeiträume oft keine Information darüber, ob in derartigen Adsorptionsbetten eine allmähliche Degradation mit der Folge einer Abnahme der Beladungskapazität stattgefunden hat.

Eine solche Degradation kann auch die Folge von Adsorption von Stoffen in der Umgebungsluft der Maschine sein, die ebenfalls von dem verwendeten Adsorbens, adsorbiert werden und die besser adsorbieren als der eigentlich zu adsorbierende Stoff. Solche störenden und ungewollten Substanzen sind vor allem sogenannte VOC - volatile organic compounds - wie Terpene, Methan, Lösemittel, organische Säuren, Aldehyde und dergleichen, die sich in der Raumluft in geringen Konzentrationen befinden.

Praktisch müsste man also die Konzentration des abzuscheidenden Stoffes und aller störenden VOCs am Ausgang des Adsorbers messen, um zu wissen, ob oder wann der Adsorber beladen ist und man kann nicht einfach erkennen, wie weit der Ladezustand oder die Degradation innerhalb des Adsorbers bereits fortgeschritten ist. Das ist unbefriedigend. Und wenn eine Beladung stattgefunden haben sollte, kann der Adsorber nur in Gänze ausgetauscht oder das Adsorbens kann komplett ausgetauscht oder regeneriert werden, unabhängig davon, in welchem Ausmaß eine Beladung tatsächlich vorliegt oder mutmaßlich vorliegen könnte.

Die Aufgabe der Erfindung ist daher, ein Verfahren und eine Vorrichtung zur Regeneration eines Adsorbers bereitzustellen, der als Sicherheitseinrichtung eines mit einem entzündlichen Arbeitsfluid betriebenen Kältekreislaufes dient, etwa einer in einem Gebäude aufgestellten Wärmepumpe oder einer Kühlanlage.

Die Erfindung löst diese Aufgabe durch eine Vorrichtung zur Regeneration eines Adsorbers, der zur adsorptiven Abscheidung von gasförmigem Arbeitsfluid dient, welches aus einer in einem Innenraum betriebenen Kältekreisanlage austritt, wobei
- ein Adsorber ausgestattet ist mit einer durchströmbaren Adsorbensschüttung sowie einem Gaseinlass, der mit dem Innenraum einer Anlage mit einem Kältekreis verbunden ist, und einem Gasauslass, der außerhalb der Anlage mit dem Kältekreis liegt und zur Umgebung hin offen ist,
- der Adsorber mindestens eine Adsorbensschüttung aufweist,
- der Adsorber mit mindestens einer Adsorberheizung ausgestattet ist,
- und diese mindestens eine Adsorberheizung in der zweiten Hälfte des Strömungswegs angeordnet ist.

Entzündliches Gas, welches aus dem Arbeitsfluid des Kreisprozesses entweicht, strömt in den Adsorber durch den Gaseinlass, die Strömung wird angetrieben durch den Druckanstieg, den die Leckage selbst hervorruft. Das System ist insofern passiv sicher, einer Leckageerkennung oder eines Gebläses bedarf es dabei nicht, auch muss keine Notklappe abströmseitig des Adsorbers vorgesehen werden. Es muss allerdings sichergestellt sein, dass die Adsorbensschüttung auch nach langer Betriebszeit unter undefinierten Umgebungsbedingungen am Aufstellungsort noch ihre gesamte Beladungsfähigkeit besitzt und nicht durch Diffusionsvorgänge degradiert ist.

Der Adsorber kann dabei innerhalb oder außerhalb des Gehäuses vorgesehen sein, in dem sich die Kältekreisanlage befindet, deren Arbeitsfluidumlauf mit einem entzündlichen Arbeitsfluid betrieben wird. Die Adsorberheizung soll dabei so ausgelegt sein, dass durch gelegentliche Erwärmung der Adsorbensschüttung eine Desorption eventuell adsorbierter VOCs durchgeführt werden kann. Die Heizung kann dabei entweder elektrisch oder mit Dampf oder mittels Heißwasser oder mittels Heizsole erfolgen. Es ist auch möglich, die Adsorberheizung aus mehreren Heizelementen zusammenzusetzen, die unterschiedliche Energiequellen verwenden und unterschiedliche Temperaturen erzeugen.

In einer Ausgestaltung wird vorgesehen, dass der Adsorber aus zwei Teiladsorbern mit jeweils einer Adsorbensschüttung aufgebaut ist, die seriell nacheinander durchströmt werden. Die Adsorberheizung kann damit separat in dem Teiladsorber installiert werden, der in Kontakt mit der Umgebungsluft steht und von hineindiffundierenden VOCs überwiegend betroffen ist. Sofern die beiden Teiladsorber über eine Einschnürung miteinander verbunden werden, sind die beiden Adsorbensschüttungen thermisch voneinander entkoppelt und es ist nicht zu befürchten, dass adsorbiertes entzündliches Arbeitsfluid, welches in der Schüttung des zuerst durchströmten Teiladsorbers adsorbiert worden ist, unabsichtlich mitdesorbiert wird, wenn die Adsorbensschüttung mit der Adsorberheizung erwärmt wird.

In einer weiteren Ausgestaltung wird vorgesehen, dass der Adsorber mit Lufteinlässen ausgestattet wird, die mit Serviceanschlüssen verbunden sind, die sich außerhalb des Adsorbers oder auch außerhalb des den Adsorber aufnehmenden Gehäuses befinden. Hierdurch wird es für Wartungspersonal möglich, Luft mit desorbierten VOCs aufzufangen und für eine Entsorgung abzuscheiden oder anderweitig unschädlich zu machen.

Auch eine Desorption von adsorbiertem entzündlichem Arbeitsfluid ist auf diese Weise möglich, indem man beladenes Gas aus dem Adsorber am Gaseinlass abzieht und die Adsorberheizung dazu nutzt, die Adsorbensschüttung oder Adsorbensschüttungen vom Gasauslass aus aufzuheizen und das aufgeheizte Gas einschließlich der entzündlichen Bestandteile aufzufangen. In solchen Fällen kann die am Gasauslass des Adsorbers befindliche Serviceöffnung zur Zugabe von Inertgas genutzt werden, etwa für Stickstoff, oder Kohlendioxid oder Helium oder Mischungen daraus, um die Entzündungsgefahr am Gasabzug zu minimieren.

Falls der Adsorber aus Teiladsorbern zusammengesetzt ist, können solche Lufteinlässe mit Serviceanschlüssen auch zwischen den Teiladsorbern vorgesehen werden. Auf diese Weise können auch einzelne Teiladsorber desorbiert werden.

In einer weiteren Ausgestaltung wird vorgesehen, dass im Bereich des Gaseinlasses des Adsorbers oder im Einströmbereich der Adsorbensschüttung eine Adsorberkühlung installiert ist. Nach erfolgter Desorption kann auf diese Weise die erwärmte Adsorberschüttung schnell wieder abgekühlt werden.

In weiteren Ausgestaltungen wird vorgesehen, dass die Adsorberheizung und ggf. die Adsorberkühlung mittels Auskopplung von Wärme bzw. Kälte aus dem Arbeitsfluidkreislauf oder dem Wärmeträgerfluidkreislauf erfolgt. Die Auskopplung kann dabei mit üblichen Wärmetauschern erfolgen. Sofern die Auskopplung direkt aus dem Arbeitsfluid des Kältekreises vorgenommen wird, sind doppelwandige Wärmetauscher vorzuziehen.

Die Erfindung löst die Aufgabe auch mit einem entsprechenden Regenerationsverfahren. Das Regenerationsverfahren wird dabei in zeitlichen Abständen batchweise durchgeführt. Die Desorption beginnt mit der Einschaltung der Adsorberheizung. Von außen in die Adsorberschüttung hineindiffundierte VOCs desorbieren hierbei. Die Aufheizung erfolgt auf ca. 80 bis 100 Grad Celsius für wenige Minuten. Nach der Aufheizung kühlt der Adsorber von selbst wieder ab und ist regeneriert. Diese turnusmäßige Regeneration kann autonom bzw. ohne Serviceeingriff erfolgen.

Sofern eine Adsorberkühlung eingerichtet ist, wird in dieser turnusmäßigen Regeneration der Adsorber anschließend wieder abgekühlt, um jederzeit sicherzustellen, dass die Adsorbensschüttung austretendes Arbeitsfluid adsorbieren kann.

In größeren Abständen oder wenn sich während der turnusmäßigen Regenerationszyklen Geruchsbildung einstellt, wird durch einen Serviceeingriff eine erweiterte Regeneration durchgeführt. Hierbei wird durch eine Serviceöffnung Inertgas in den Gaseinlass des Adsorbers eingeleitet, die Desorption erfolgt hierbei durch Konzentrationsabsenkung im Adsorber, das desorptiv belastete Gas wird am Gasauslass des Adsorbers abgesaugt und entweder über eine mobile Leitung ins Freie entsorgt oder in einer separaten Adsorberkartusche aufgefangen und abgereichert.

In einer noch weitergehenden Regeneration kann bei eingeschalteter Adsorberheizung eine Erwärmung des gesamten Adsorbers vorgenommen werden, wobei das desorptiv belastete Gas an der Serviceöffnung am Gaseinlass abgezogen wird. Dies wird solange weitergeführt, bis sich keine VOCs oder entzündliches Arbeitsfluid mehr im abgezogenen Abgas mehr befinden. Danach wird der Adsorber abgekühlt, indem entweder eine große Menge Umgebungsluft durch den Adsorber gezogen wird, oder, wenn der Adsorber über eine Adsorberkühlung verfügt, durch Einschaltung der Kühlung unter leichter Zugabe von Spülgas in die Serviceöffnung am Gaseinlass des Adsorbers. Danach ist die Adsorbensschüttung des Adsorbers vollständig regeneriert, die Serviceöffnungen werden verschlossen und die Wartung wird beendet.

Weitere Ausgestaltungen betreffen die für die Adsorption und Desorption verwendeten Adsorbenzien. Sofern als Arbeitsfluide Kohlenwasserstoffe wie R290, R600a oder R1270 zum Einsatz kommen, wird als Adsorbens Aktivkohle oder aktiviertes Polyvinylidenchlorid oder ein aktiviertes Polyvinylidenchlorid-Copolymer verwendet. Im Fall eines zweigeteilten Adsorbers können in beiden Adsorberteilen jeweils verschiedene Adsorbenzien davon eingesetzt werden.

Die Erfindung wird nachfolgend anhand von 2 Prinzipskizzen näher erläutert. Hierbei zeigen:
- Fig. 1:: einen Adsorber mit Adsorberheizung in einer Wärmepumpe,
- Fig. 2:: einen Adsorber aus zwei Teiladsorbern, drei Serviceöffnungen sowie Adsorberheizung und Adsorberkühlung in einer Wärmepumpe.

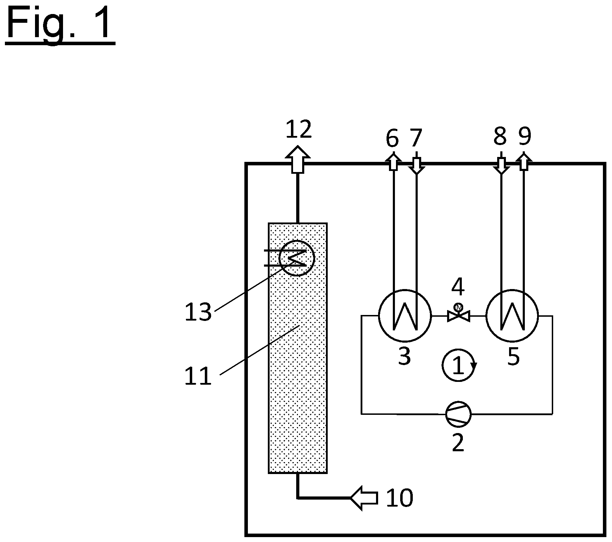

Fig. 1 zeigt eine Wärmepumpe mit einem linksdrehenden Kreisprozess 1, bei der ein entzündliches Arbeitsfluid von einem Verdichter 2 in einen Kondensator 3 gefördert wird, wo es unter Wärmeabgabe kondensiert. Anschließend wird es in einem Entspannungsventil 4 entspannt, wobei es sich stark abkühlt. Im anschließenden Verdampfer 5 verdampft das Arbeitsfluid unter Wärmeaufnahme und wird dampfförmig wieder zum Verdichter 2 geleitet.

Im Heizbetrieb wird die Wärme im Kondensator 3 an den Heizkreislauf 7, 6 abgegeben, im Klimatisierungsbetrieb findet die Wärmeabgabe an einen Solekreislauf 7, 6 statt, der mit einem Kühler verbunden ist. Die Wärmeaufnahme erfolgt im Heizbetrieb im Verdampfer 5, der an einen Solekreislauf 8, 9 angeschlossen ist, aus Umgebungswärme, im Klimatisierungsbetrieb erfolgt die Kälteabgabe, die einer Wärmeaufnahme entspricht, an einen Kühlsolekreislauf 8, 9.

Im Gehäuse der Wärmepumpe ist der Adsorber 11 mit einer Adsorbensschüttung untergebracht, wobei am Fuß des Adsorbers 11 eine Gaseinlassöffnung 10 vorgesehen ist. Im Falle einer Leckage, beispielsweise bei Verwendung von R290 als Arbeitsfluid, sinkt das gasförmige Arbeitsfluid tendenziell nach unten und gelangt über die Gaseinlassöffnung 10 in den Adsorber 11, wo R290 von Adsorbens abgeschieden wird. Der Adsorber ist zum Außenbereich der Wärmepumpe über die Gasauslassöffnung 12 offen, weswegen VOCs, die sich in der Umgebung des Adsorbers befinden, in die Adsorbensschüttung eindiffundieren können. Aus diesem Grund ist die Adsorberheizung 13 vorgesehen, mit deren Hilfe die adsorbierten VOCs im oberen Teil der Adsorbensschüttung auf einfache Weise desorbiert werden können. Diese Desorption geschieht turnusmäßig, sie muss aufgrund der üblicherweise geringen Mengen nicht vollständig erfolgen und dauert nur wenige Minuten.

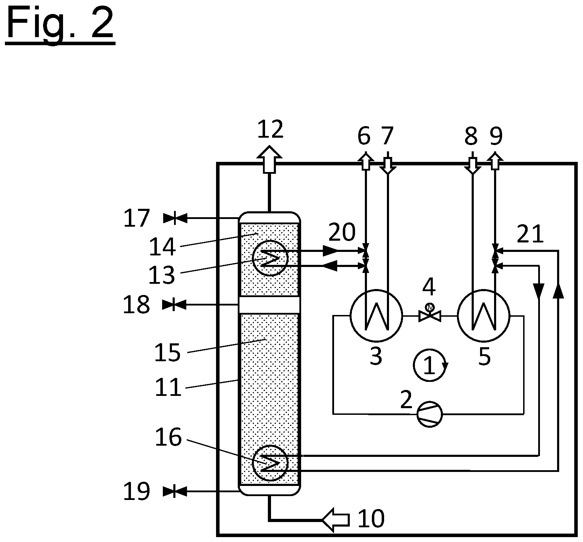

Fig. 2 zeigt den gleichen Kreisprozess mit Einrichtungen für eine erweiterte Regeneration des Adsorbers 11. Der Adsorber 11 ist dabei geteilt in einen oberen Teiladsorber 14 und einen unteren Teiladsorber 15, wobei der obere Teiladsorber 14 deutlich kleiner ausgeführt ist als der untere Teiladsorber 15. Die Adsorberheizung 13 ist im oberen Teiladsorber 14 installiert, im unteren Teiladsorber 15 ist eine Adsorberkühlung 16 vorgesehen.

Für Spülgase sind die obere Serviceöffnung 17, die mittlere Serviceöffnung 18 und die untere Serviceöffnung 19 vorgesehen. Die Heizung der Adsorberheizung 13 erfolgt durch Auskopplung von Heizsole 20, die Adsorberkühlung 16 erfolgt durch Auskopplung von Kühlsole 21.

Die erweiterte Regeneration des Adsorbers 11 erfolgt durch Wartungspersonal unter Verwendung der Serviceöffnungen 17, 18 und 19. Zuerst wird der obere Teiladsorber 14 nach seiner Aufheizung mit Inertgas, welches in die mittlere Serviceöffnung 18 eingeleitet wird, gespült, wobei das beladene Spülgas aus der oberen Serviceöffnung 17 abgezogen und entsorgt oder aufgearbeitet wird.

Sollte sich dabei zeigen, dass sich nicht nur VOCs aus der Umgebungsluft, sondern auch Arbeitsfluid im Abgas, welches der oberen Serviceöffnung 17 entnommen wird, befindet, wird die mittlere Serviceöffnung 18 verschlossen und das Inertgas wird in die obere Serviceöffnung eingeleitet und das beladene Abgas wird aus der unteren Serviceöffnung 19 abgezogen. Hierbei wird es beim Durchströmen der Adsorberheizung 13 erwärmt und erwärmt die Adsorbensschüttung des unteren Teiladsorbers, von dem angenommen werden kann, dass er mit Arbeitsfluid beladen ist, und die Durchbruchskurve bereits in den oberen Teiladsorber hineinreicht.

Der Desorptionsvorgang wird solange weitergeführt, bis kein Arbeitsfluid mehr gemessen werden kann. Der Adsorber kann dann als regeneriert angesehen werden und es folgt eine Abkühlphase, in der Spülgas in die untere Serviceöffnung eingeleitet und die Adsorberkühlung eingeschaltet wird. Das Spülgas wird aus der oberen Serviceöffnung abgezogen, sobald die Kühlung des Adsorbers abgeschlossen ist, werden die Serviceöffnungen wieder verschlossen und die Leckagesuche bzw. Reparatur kann erfolgen.

### Bezugszeichenliste

- 1:: Kreisprozess
- 2:: Verdichter
- 3:: Kondensator
- 4:: Entspannungsventil
- 5:: Verdampfer
- 6:: Heizsolekreislauf
- 7:: Heizsolekreislauf
- 8:: Kühlsolekreislauf
- 9:: Kühlsolekreislauf
- 10:: Gaseinlassöffnung
- 11:: Adsorber
- 12:: Gasauslassöffnung
- 13:: Adsorberheizung
- 14:: oberer Teiladsorber
- 15:: unterer Teiladsorber
- 16:: Adsorberkühlung
- 17:: obere Serviceöffnung
- 18:: mittlere Serviceöffnung
- 19:: untere Serviceöffnung
- 20:: Heizsole
- 21:: Kühlsole

## Patentansprüche

1. Vorrichtung zur Regeneration eines Adsorbers (11), der zur adsorptiven Abscheidung von gasförmigem Arbeitsfluid dient, welches aus einer in einem Innenraum betriebenen Kältekreisanlage (1) austritt, wobei
- der Adsorber (11) ausgestattet ist mit einer durchströmbaren Adsorbensschüttung sowie einem Gaseinlass (10), der mit dem Innenraum einer Anlage mit einem Kältekreis verbunden ist, und einem Gasauslass (12), der außerhalb der Anlage mit dem Kältekreis liegt und zur Umgebung hin offen ist,
- der Adsorber (11) mindestens eine Adsorbensschüttung aufweist,
**dadurch gekennzeichnet, dass**
- der Adsorber (11) mit mindestens einer Adsorberheizung (13) ausgestattet ist,
- und diese mindestens eine Adsorberheizung (13) in der zweiten Hälfte des Strömungswegs angeordnet ist.

2. Vorrichtung nach Anspruch 1, **dadurch gekennzeichnet, dass** der Adsorber (11) aus zwei Teiladsorbern (14, 15) mit jeweils einer Adsorbensschüttung aufgebaut ist, die seriell nacheinander durchströmt werden.

3. Vorrichtung nach einem der Ansprüche 1 oder 2, **dadurch gekennzeichnet, dass** der Adsorber (11) mit Lufteinlässen ausgestattet wird, die mit Serviceanschlüssen (17, 18, 19) verbunden sind, die sich außerhalb des Adsorbers (11) oder auch außerhalb des den Adsorber (11) aufnehmenden Gehäuses befinden.

4. Vorrichtung nach einem der Ansprüche 1 bis 3, **dadurch gekennzeichnet, dass**
- der Adsorber (11) mit mindestens einer Adsorberkühlung (16) ausgestattet ist,
- und diese mindestens eine Adsorberkühlung (16) in der ersten Hälfte des Strömungswegs angeordnet ist

5. Vorrichtung nach einem der Ansprüche 1 bis 4, **dadurch gekennzeichnet, dass** die Adsorberheizung (13) mittels Auskopplung (20) von Wärme aus dem Arbeitsfluidkreislauf oder dem Wärmeträgerfluidkreislauf erfolgt.

6. Vorrichtung nach einem der Ansprüche 1 bis 4, **dadurch gekennzeichnet, dass** die Adsorberkühlung (16) mittels Auskopplung (21) von Kälte aus dem Arbeitsfluidkreislauf oder dem Wärmeträgerfluidkreislauf erfolgt.

7. Verfahren zur Regeneration einer Adsorbensschüttung in einem Adsorber (11) gemäß einem der Ansprüche 1 bis 6, **dadurch gekennzeichnet, dass** in definierten zeitlichen Abständen die Adsorberheizung (13) turnusmäßig eingeschaltet und ein Teil der Adsorbensschüttung aufgeheizt wird.

8. Verfahren nach Anspruch 7, **dadurch gekennzeichnet, dass** nach dem Ende der Aufheizung der Adsorbensschüttung die Adsorberkühlung (16) eingeschaltet und die Adsorbensschüttung abgekühlt wird.

9. Verfahren nach einem der Ansprüche 7 oder 8, **dadurch gekennzeichnet, dass** in der Serviceöffnung (17) am Gasauslass Spülgas eingeleitet wird, dieses Spülgas von der Adsorberheizung (13) erwärmt wird, dieses Spülgas an der Serviceöffnung (19) am Gaseinlass abgezogen wird und die Adsorbensschüttung vollständig aufgeheizt und durchgespült wird.

10. Verfahren nach einem der Ansprüche 7 bis 9, **dadurch gekennzeichnet, dass** in der Serviceöffnung (19) am Gaseinlass Spülgas eingeleitet wird, dieses Spülgas von der Adsorberkühlung (16) gekühlt wird, dieses Spülgas an der Serviceöffnung (17) am Gasauslass abgezogen wird und die Adsorbensschüttung vollständig abgekühlt und durchgespült wird.

11. Verfahren nach einem der Ansprüche 7 bis 10, **dadurch gekennzeichnet, dass** als Spülgas Inertgas verwendet wird.

12. Verfahren nach einem der Ansprüche 7 bis 11, **dadurch gekennzeichnet, dass** als Wärmeträger zur Aufheizung von Adsorbens Heizsole (20) verwendet wird.

13. Verfahren nach einem der Ansprüche 7 bis 12, **dadurch gekennzeichnet, dass** als Wärmeträger zur Kühlung von Adsorbens Kühlsole (21) verwendet wird.

14. Verwendung eines Adsorbens in einer Vorrichtung nach einem der vorangegangenen Ansprüche 1 bis 6 in einem Verfahren nach einem der Ansprüche 7 bis 13, **dadurch gekennzeichnet, dass** das Adsorbens aus der Gruppe umfassend
- Aktivkohle,
- aktiviertes Polyvinylidenchlorid,
- aktiviertes Polyvinylidenchlorid-Copolymer
ausgewählt wird.

15. Verwendung eines Adsorbens nach Anspruch 14 in einer Vorrichtung nach Anspruch 2, **dadurch gekennzeichnet, dass** im Teiladsorber am Adsorberausgang ein Adsorbens mit einer höheren Adsorptionskapazität und einer höheren erforderlichen Desorptionswärme als im Teiladsorber am Adsorbereingang verwendet wird.
